# EUROPEAN PATENT SPECIFICATION

(11) **EP 1 625 950 B1**
(45) Date of publication and mention of the grant of the patent: **28.03.2012**
(21) Application number: 05014541.6
(22) Date of filing: 05.07.2005
(51) Int. Cl.: B60C 11/12, B60C 11/00, B60C 11/14

(54) **Pneumatic tire**
Luftreifen
Bandage pneumatique

(30) Priority: 09.08.2004 JP 2004232185; 21.04.2005 JP 2005123360
(43) Date of publication of application: 15.02.2006
(73) Proprietor: Sumitomo Rubber Industries, Ltd., Kobe-shi, Hyogo-ken (JP)
(72) Inventor: Tsubono, Fumihiro, Chuo-ku Kobe-shi Hyogo 651-0072 (JP); Kageyama, Naoki, Chuo-ku Kobe-shi Hyogo 651-0072 (JP); Koya, Mitsuharu, Chuo-ku Kobe-shi Hyogo 651-0072 (JP)
(74) Representative: Manitz, Finsterwald & Partner GbR

(56) References cited:
- EP-A- 0 968 849
- EP-A- 1 108 566
- WO-A-2004/005051
- PATENT ABSTRACTS OF JAPAN vol. 1995, no. 10, 30 November 1995 (1995-11-30) & JP 07 186633 A (BRIDGESTONE CORP), 25 July 1995 (1995-07-25)

## Description

This application claims priority on Japanese Patent Applications No. 2004-232185 filed on August 9, 2004 and No. 2005-123360 filed on April 21, 2005, the entire contents of which are hereby incorporated by reference.

### BACKGROUND OF THE INVENTION

### Field of the Invention

The present invention relates to a pneumatic tire. More particularly, the present invention relates to an improvement in a tread of a tire.

### Description of the Related Art

On snowy and icy road surfaces, a spike tire has been used for a long time. In recent years, a studless tire is a mainstream. In the studless tire, a braking performance on the snowy and icy road surfaces is important. In order to enhance the braking performance, a tire obtained by blending a glass fiber with a tread has been put on the market. The glass fiber has a higher hardness than ice. In the tire obtained by blending the glass fiber with the tread, the glass fiber scratches the snowy and icy road surfaces. By the scratch, the braking performance of the tire can be enhanced.

In the vulcanization of the tire, the tread abuts on the cavity surface of a mold. By the abutment, a skin layer is formed on the tread. The surface of the skin layer has a mirror finished surface. A short fiber is not exposed from the surface of the skin layer. When the tire is used, the skin layer is worn out at a comparatively early stage. By the wear-out, the glass fiber is exposed from the surface of the tread. By the exposure, the braking performance can be exhibited.

There have been made various proposals intended for enhancing the braking performance in a state in which the skin layer remains. For example, Japanese Laid-Open Patent Publication No. Hei 7-186633 has disclosed a tire in which a fine rib is formed on the surface of a tread. Japanese Laid-Open Patent Publication No. Hei 9-323511 has disclosed a tire comprising a siping having a small depth on a tread thereof. A tire according to the preamble of claim 1 is known from WO 2004/005051. Further relevant prior art is known from EP-A-0968849, EP-A-1013480 and DE-A-19711852.

The braking performance at the start of use in the conventional tire is still insufficient. A user has desired a further enhancement in the braking performance. It is an object of the present invention to provide a pneumatic tire having an excellent braking performance.

### SUMMARY OF THE INVENTION

A pneumatic tire according to the present invention comprises the features claim 1. A large number of small grooves are formed on the surface of the tread portion. The small groove has such a shape as to constitute a whole or part of a wavy curve.

It is preferable that a width of the small groove should be equal to or greater than 0.1 mm and be equal to or smaller than 2.0 mm. A pitch of the small groove is equal to or greater than 0.5 mm and be equal to or smaller than 5.0 mm.

The wavy curve is extended in an axial direction of the tire. The number of cycles of the wavy curve from one of tread ends to the other tread end is equal to or larger than 1.0 and is equal to or smaller than 7.0.

The tread portion has a vertical groove, a lateral groove and a large number of blocks partitioned by the vertical groove and the lateral groove. A large number of small grooves are formed on surfaces of the blocks. It is preferable that the block should further include a siping taking a zigzag shape on the surface. The small groove and the siping are inclined reversely to each other in an axial direction. It is preferable that the block should be formed by crosslinking a rubber composition having a short fiber dispersed therein.

The blocks include a center block positioned in the vicinity of an equator plane and a shoulder block positioned in the vicinity of a tread end. It is preferable that a density Dc of small grooves in the center block should be higher than a density Ds of small grooves in the shoulder block. It is preferable that a ratio (Dc/Ds) should be equal to or higher than 1.5 and be equal to or lower than 5.0.

The tread portion may have a plurality of vertical grooves and a plurality of ribs partitioned by the vertical grooves. A large number of small grooves are formed on surfaces of the ribs.

The ribs include a center rib positioned in the vicinity of an equator plane and a shoulder rib positioned in the vicinity of a tread end. It is preferable that a density Dc of small grooves in the center rib should be higher than a density Ds of small grooves in the shoulder rib. It is preferable that a ratio (Dc/Ds) should be equal to or higher than 1.5 and be equal to or lower than 5.0.

In the tire according to the present invention, the direction of the extension of the small groove is variously changed. The tire is excellent in a braking performance at time of the start of use.

### BRIEF DESCRIPTION OF THE DRAWINGS

Fig. 1 is a sectional view showing a pneumatic tire according to an embodiment of the present invention,
Fig. 2 is an enlarged view showing a part of a tread portion of the tire in Fig. 1,
Fig. 3 is an enlarged view showing a part of the tread portion in Fig. 2, and
Fig. 4 is an enlarged and developed view showing a part of a tread portion of a tire according to another embodiment of the present invention.

### DESCRIPTION OF THE PREFERRED EMBODIMENTS

The present invention will be described below in detail based on preferred embodiments with reference to the drawings.

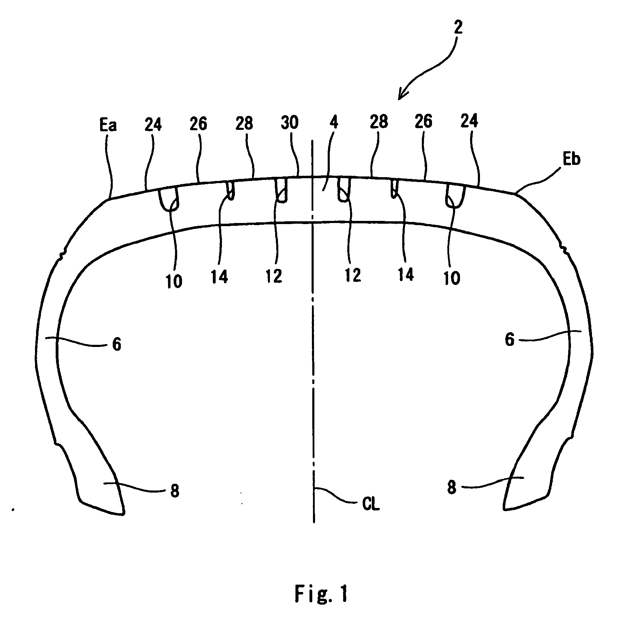

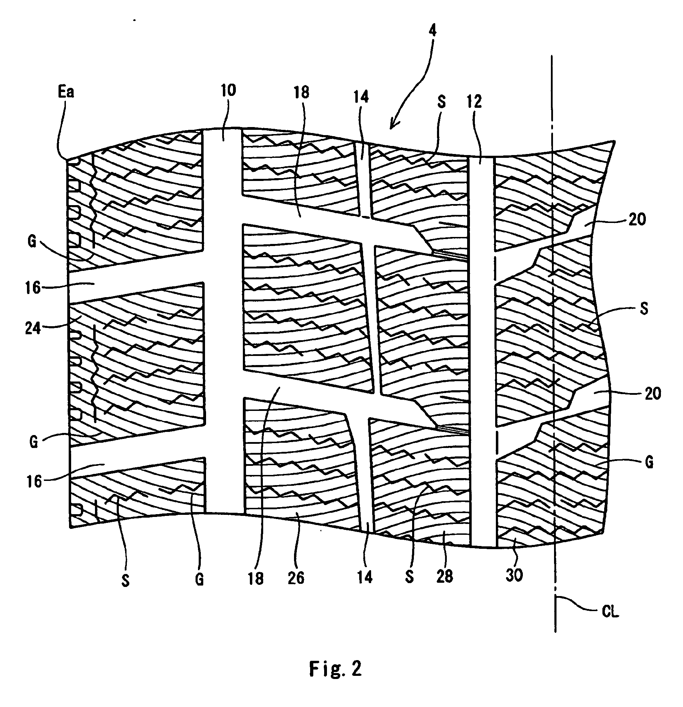

In Fig. 1, a vertical direction is set to be a radial direction of a tire 2 and a transverse direction is set to be an axial direction of the tire 2. The tire 2 comprises a tread portion 4, left and right sidewall portions 6, and left and right bead portions 8. In the tire 2, a carcass is laid between the bead portion 8 on the left side and the bead portion 8 on the right side, which is not shown. In Fig. 2, a vertical direction is set to be a circumferential direction of the tire 2 and a transverse direction is set to be the axial direction of the tire 2. A center line CL shown in Fig. 2 indicates an equator plane of the tire 2. The tire 2 is a studless tire.

The tread portion 4 includes a first vertical groove 10, a second vertical groove 12, a subvertical groove 14, a first lateral groove 16, a second lateral groove 18, and a third lateral groove 20 on a surface thereof. The first vertical groove 10 and the second vertical groove 12 are extended wholly in the circumferential direction. The first lateral groove 16 couples a tread end Ea to the first vertical groove 10. The second lateral groove 18 couples the first vertical groove 10 to the second vertical groove 12. The third lateral groove 20 couples the second vertical groove 12 on the right side (see Fig. 1) to the second vertical groove 12 on the left side. The subvertical groove 14 is present between the two second lateral grooves 18.

The tread portion 4 includes a first block 24, a second block 26, a third block 28 and a fourth block 30. The contour of each of the blocks 24, 26, 28 and 30 substantially takes a square shape. A block taking another contour shape may be provided. The first block 24 is positioned on the outside of the first vertical groove 10. The first block 24 is partitioned by the first vertical groove 10 and the two first lateral grooves 16. The second block 26 is positioned between the first vertical groove 10 and the subvertical groove 14. The second block 26 is partitioned by the first vertical groove 10, the subvertical groove 14 and the two second lateral grooves 18. The third block 28 is positioned between the subvertical groove 14 and the second vertical groove 12. The third block 28 is partitioned by the subvertical groove 14, the second vertical groove 12 and the two second lateral grooves 18. The fourth block 30 is provided across the equator plane CL. The fourth block 30 is positioned between the second vertical groove 12 on the right side and the second vertical groove 12 on the left side. The fourth block 30 is partitioned by the two second vertical grooves 12 and the two third lateral grooves 20.

Each of the blocks 24, 26, 28 and 30 has a siping S. The siping S takes a zigzag shape. The siping S is formed by the knife blade of a mold. By the edge effect and dewatering function of the siping S, the braking performance of the tire 2 can be enhanced.

Each of the blocks 24, 26, 28 and 30 has a large number of small grooves G. When a wavy curve is assumed on the surface of the tread portion 4, the small groove G is formed along a portion included in the blocks 24, 26, 28 and 30 in the wavy curve. In other words, the shape of the small groove G takes a part of the wavy curve. As is apparent from Fig. 2, the wavy curve is extended in an axial direction. The wavy curve reaches an end Eb from the end Ea of the tread portion 4. A large number of wavy curves are assumed repetitively in a circumferential direction. A typical wavy curve is a sine curve.

The small groove G has an edge. Consequently, a coefficient of friction of a road surface and the tire 2 can be enhanced by the small groove G. In the small groove G using the wavy curve, a large number of edge components are present. As compared with grooves on a straight line, therefore, the coefficient of friction can be enhanced. The small groove G also contributes to a dewatering function. The small groove G enhances the braking performance of the tire 2. The tangential direction of the wavy curve is varied depending on a point. The small groove G having such a shape as to constitute a whole or part of the wavy curve is formed so that the braking performance in every direction can be enhanced. Furthermore, the small groove G also contributes to an air vent in the vulcanization of the tire 2.

It is preferable that the width of the small groove G should be equal to or greater than 0.1 mm and be equal to or smaller than 2. 0 mm. In some cases in which the width is smaller than the range, the dewatering function is insufficient. From this viewpoint, it is more preferable that the width should be equal to or greater than 0.3 mm. In some cases in which the width is greater than the range, the braking performance is insufficient due to a decrease in a contact area. From this viewpoint, it is more preferable that the width should be equal to or smaller than 0.5 mm.

The depth of the small groove G is equal to or greater than 0.1 mm and equal to or smaller than 0.5 mm. In some cases in which the depth is smaller than the range, the dewatering function is insufficient. From this viewpoint, it is more preferable that the depth should be equal to or greater than 0.2 mm. If the depth exceeds the range, the blocks 24, 26, 28 and 30 are easily deformed due to a low block rigidity. The excessive deformation of the blocks 24, 26, 28 and 30 induces a reduction in a dewatering property.

The pitch of the small groove G is equal to or greater than 0.5 mm and equal to or smaller than 5.0 mm. If the pitch is smaller than the range, the blocks 24, 26, 28 and 30 are easily deformed due to a low block rigidity. The excessive deformation of the blocks 24, 26, 28 and 30 induces a reduction in the dewatering property. Form this viewpoint, it is more preferable that the pitch should be equal to or greater than 1.0 mm. In some cases in which the pitch exceeds the range, the braking performance is insufficient. From this viewpoint, it is more preferable that the pitch should be equal to or smaller than 4.5 mm. The pitch is measured in a perpendicular direction to the direction of the extension of the wavy curve. In the tire 2 shown in Fig. 2, the pitch is measured in the circumferential direction.

In the case in which the wavy curve is extended in the axial direction of the tire 2, the number C of cycles of the wavy curve from the tread end Ea to the tread end Eb is preferably equal to or greater than 1.0 and is more preferably equal to or greater than 2.0. When the number of the blocks 24, 26, 28 and 30 from one of the tread ends to the other tread end is set to be N, the number C of cycles is preferably equal to or smaller than N and is more preferably equal to or smaller than (N/2). More specifically, the number C of cycles is preferably equal to or smaller than 7 and is more preferably equal to or smaller than 3.5. The number of cycles of the wavy curve shown in Fig. 2 is 2.0. It is preferable that the amplitude of the wavy curve should be equal to or greater than 3 mm and be equal to or smaller than 30 mm. The amplitude of the wavy curve shown in Fig. 2 is 7 mm.

The blocks 24, 26, 28 and 30 are formed of a crosslinked rubber. It is preferable that a short fiber should be blended with a rubber composition to be used in the blocks 24, 26, 28 and 30. The short fiber is dispersed into the blocks 24, 26, 28 and 30. The short fiber scratches snowy and icy road surfaces. The short fiber contributes to the braking performance of the tire 2. The surfaces of the blocks 24, 26, 28 and 30 abut on the cavity surface of the mold. Therefore, a skin layer is formed. The skin layer rarely contains the short fiber. In the tire 2 in a brand-new stage, the short fiber is not exposed from the surfaces of the blocks 24, 26, 28 and 30. At time of the start of the use of the tire 2, the siping S and the small groove G mainly contribute to the braking performance. With the use of the tire 2, the surfaces of the blocks 24, 26, 28 and 30 are gradually worn out. By the wear-out, the small groove G becomes gradually shallower so that the short fiber is gradually exposed. When the wear-out progresses, the short fiber contributes to the braking performance in place of the small groove G. In the tire 2, an excellent braking performance can be exhibited for a long duration from the start of the use.

The short fiber to be blended may be an inorganic fiber or an organic fiber. Specific examples of the inorganic fiber include a glass fiber and a carbon fiber. Specific examples of the organic fiber include a nylon fiber, a polyester fiber and a polyethylene fiber. Plural kinds of fibers may be used together. In respect of the braking performance, the glass fiber is preferable. The glass fiber and other fibers may be used together. It is preferable that the diameter of the short fiber should be equal to or greater than 1µm and be equal to or smaller than 100 µm. It is preferable that the length of the short fiber should be equal to or greater than 0.1 mm and be equal to or smaller than 5.0 mm. It is preferable that the amount of the short fiber should be equal to or larger than 1 part by weight and be equal to or smaller than 50 parts by weight with respect to 100 parts by weight of a base rubber.

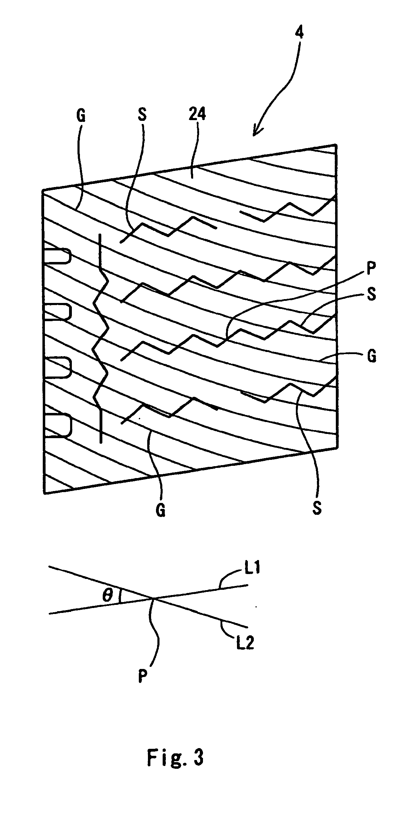

Fig. 3 is an enlarged view showing a part of the tread portion 4 in Fig. 2. In Fig. 3, a transverse direction is set to be an axial direction. Fig. 3 shows the first block 24. As is apparent from Fig. 3, the siping S of the first block 24 is provided rightward and upward. On the other hand, the small groove G of the first block 24 is provided rightward and downward. In the first block 24, the siping S and the small groove G are inclined reversely to each other in the axial direction. By the reverse inclination, the braking performance of the tire 2 can be enhanced.

In Fig. 3, a straight line L1 indicates a direction of the siping S and a straight line L2 indicates a direction of the small groove G. In respect of the braking performance, an angle θ formed by the straight lines L1 and L2 is preferably equal to or greater than 10 degrees, particularly, is equal to or greater than 20 degrees, and is preferably equal to or smaller than 90 degrees, particularly, is equal to or smaller than 60 degrees. The angle θ is measured on the closest intersecting point P to the center of gravity of each of the blocks 24, 26, 28 and 30. It is preferable that the straight lines L1 and L2 should be substantially symmetrical with a line in the axial direction which passes through the point P.

As is apparent from Fig. 2, the siping S is provided rightward and downward and the small groove G is provided rightward and upward in the second block 26. In the second block 26, the siping S and the small groove G are inclined reversely to each other in the axial direction. In the third block 28, the siping S is provided rightward and downward and the small groove G is provided rightward and upward. In the third block 28, the siping S and the small groove G are inclined reversely to each other in the axial direction. A ratio (N1/Nt) of a number N1 of blocks in which the siping S and the small groove G are inclined reversely to each other in the axial direction to a total number Nt of the blocks is preferably equal to or greater than 0.5 and is more preferably equal to or greater than 0.7. Ideally, the ratio (N1/Nt) is 1.0.

As is apparent from Figs. 2 and 3, the first lateral groove 16 partitioning the first block 24 is provided rightward and upward. On the other hand, as described above, the small groove G in the first block 24 is provided rightward and downward. In the first block 24, the first lateral groove 16 and the small groove G are inclined reversely to each other in the axial direction. By the reverse inclination, the braking performance of the tire 2 can be enhanced.

As is apparent from Fig. 2, the second lateral groove 18 is provided rightward and downward and the small groove G is provided rightward and upward in the second block 26. In the second block 26, the second lateral groove 18 and the small groove G are inclined reversely to each other in the axial direction. In the third block 28, the second lateral groove 18 is provided rightward and downward and the small groove G is provided rightward and upward. In the third block 28, the second lateral groove 18 and the small groove G are inclined reversely to each other in the axial direction. A ratio (N2/Nt) of a number N2 of blocks in which the lateral groove partitioning the blocks and the small groove G are inclined reversely to each other in the axial direction to the total number Nt of the blocks is preferably equal to or greater than 0. 5 and is more preferably equal to or greater than 0.7. Ideally, the ratio (N2/Nt) is 1.0.

The small groove G having such a shape as to constitute the whole wavy curve may be formed in the blocks 24, 26, 28 and 30. The wavy curve extended in the circumferential direction may be assumed.

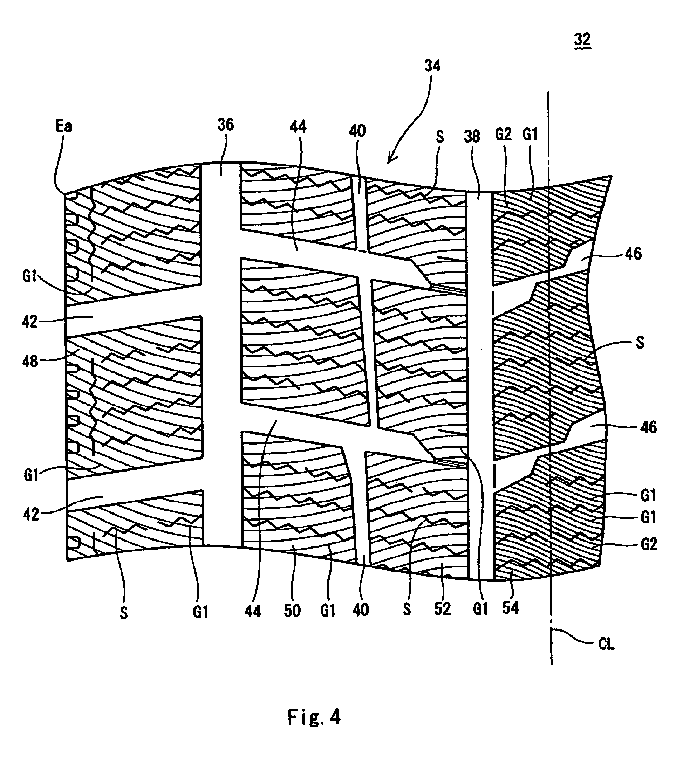

Fig. 4 is an enlarged and developed view showing a part of a tread portion 34 of a tire 32 according to another embodiment of the present invention. A center line CL shown in Fig. 4 is an equator plane of the tire 32. The sectional shape of the tire 32 is equivalent to that of the tire 2 shown in Fig. 1. The tire 32 is a studless tire.

In the same manner as in the tire 2 shown in Fig. 1, the tread portion 34 includes a first vertical groove 36, a second vertical groove 38, a subvertical groove 40, a first lateral groove 42, a second lateral groove 44 and a third lateral groove 46. The tread portion 34 further includes a first block 48, a second block 50, a third block 52 and a fourth block 54. The fourth block 54 is provided across the equator plane CL. In a tread pattern in which the block 54 provided across the equator plane CL is present, the block provided across the equator plane CL is referred to as a center block, the closest block to the end of the tread portion 34 is referred to as a shoulder block, and a block interposed between the center block and the shoulder block is referred to as an intermediate block. In the tire 32 shown in Fig. 4, the first block 48 is the shoulder block, the second block 50 and the third block 52 are the intermediate blocks, and the fourth block 54 is the center block. Each of the blocks 48, 50, 52 and 54 has a siping S.

Each of the blocks 48, 50, 52 and 54 has a large number of small grooves G1. When a wavy curve is assumed on the surface of the tread portion 34, the small groove G1 is formed along a portion included in the blocks 48, 50, 52 and 54 in the wavy curve. In other words, the shape of the small groove G1 takes a part of the wavy curve. As is apparent from Fig. 4, the wavy curve is extended in an axial direction. The wavy curve reaches an end (not shown) from another end Ea of the tread portion 34. A large number of wavy curves are assumed repetitively in a circumferential direction. A typical wavy curve is a sine curve.

The fourth block 54 includes a small groove G2 together with the small groove G1. The small grooves G1 and G2 are provided alternately in the circumferential direction. When another wavy curve is assumed on the surface of the tread portion 34, the small groove G2 is formed along a portion of the wavy curve which is included in the fourth block 54. In other words, the shape of the small groove G2 is a part of the other wavy curves. The shape of the wavy curve along which the small groove G2 is provided is identical to that of the wavy curve along which the small groove G1 is provided. Although the wavy curve along which the small grove G2 is provided can also be assumed on the first block 48, the second block 50 and the third block 52, the small groove provided along the same wavy curve is not formed in the first block 48, the second block 50 and the third block 52. In other words, the pitches of the small grooves G1 and G2 in the center block 54 are a double of the pitch of the small groove G1 in the shoulder block 48. A density Dc of each of the small grooves G1 and G2 in the center block 54 is higher than a density Ds of the small grooves G1 in the shoulder block 48. The density is obtained by dividing the total length of the small grooves G1 and G2 included in the blocks 48 and 54 by the area of the contact surfaces of the blocks.

The contact time of the center block 54 is longer than that of the shoulder block 48. Moreover, the contact pressure of the center block 54 is higher than that of the shoulder block 48. A large number of small grooves G1 and G2 are formed in the center block 54 so that the braking performance of the tire 32 can be enhanced. The density of the small grooves G1 in the shoulder block 48 is low. Therefore, the rigidity of the shoulder block 48 can be maintained.

In respect of the braking performance and the rigidity of the shoulder block 48, a ratio (Dc/Ds) is preferably equal to or higher than 1.5, is more preferably equal to or higher than 1. 7, and is particularly preferably equal to or higher than 1.9. In respect of an uneven wear resistance and a handling stability, the ratio (Dc/Ds) is preferably equal to or lower than 5.0, is more preferably equal to or lower than 3.0, is further preferably equal to or lower than 2.5, and is particularly preferably equal to or lower than 2.0. In the tire 32 shown in Fig. 4, the ratio (Dc/Ds) is approximately 2.0.

It is preferable that a density Dm of the intermediate block should be equal to or higher than the density Ds of the shoulder block. It is preferable that the density Dm of the intermediate block should be equal to or lower than the density Dc of the center block. In the example of Fig. 4, the density Dm of the intermediate block is equal to the density Ds of the shoulder block.

It is preferable that the widths of the small grooves G1 and G2 should be equal to or greater than 0.1 mm and be equal to or smaller than 2.0 mm. It is more preferable that the widths should be equal to or greater than 0. 3 mm. It is more preferable that the widths should be equal to or smaller than 0.5 mm. It is preferable that the depths of the small grooves G1 and G2 should be equal to or greater than 0.1 mm and be equal to or smaller than 1.0 mm. It is more preferable that the depths should be equal to or greater than 0.2 mm. It is more preferable that the depths should be equal to or smaller than 0.5 mm. It is preferable that the pitches of the small grooves G1 and G2 should be equal to or greater than 0.5 mm and be equal to or smaller than 5.0 mm. It is more preferable that the pitches should be equal to or greater than 1.0 mm. It is more preferable that the pitches should be equal to or smaller than 4.5 mm.

In case of a block pattern in which the vertical groove is present on the equator plane CL, adjacent blocks to the left and right sides of the vertical groove are referred to as the center blocks. The closest block to the end of the tread portion 34 is referred to as the shoulder block and the block interposed between the center block and the shoulder block is referred to as the intermediate block.

Also in a tread pattern which does not have a lateral groove but a plurality of vertical grooves and a plurality of ribs partitioned by the vertical grooves, small grooves is effective. Also in the tread pattern, it is preferable that a density Dc of small grooves in a center rib should be higher than a density Ds of small grooves in a shoulder rib. In respect of a braking performance and a rigidity of the shoulder rib, a ratio (Dc/Ds) is preferably equal to or higher than 1.5, is more preferably equal to or higher than 1. 7, and is particularly preferably equal to or higher than 1.9. In respect of an abrasion resistance and a handling stability, the ratio (Dc/Ds) is preferably equal to or lower than 5.0, is more preferably equal to or lower than 3.0, is further preferably equal to or lower than 2.5, and is particularly preferably equal to or lower than 2.0.

It is preferable that a density Dm of an intermediate rib should be equal to or higher than the density Ds of the shoulder rib. It is preferable that the density Dm of the intermediate rib should be equal to or lower than the density Dc of the center rib.

In a tread pattern in which there is a rib provided across the equator plane CL, the rib provided across the equator plane CL is referred to as a center rib, the closest rib to the end of a tread portion is referred to as a shoulder rib, and a rib interposed between the center rib and the shoulder rib is referred to as an intermediate rib. In case of a rib pattern in which a vertical groove is present on the equator plane CL, adjacent ribs to the left and right sides of the vertical groove are referred to as the center ribs. The closest rib to the end of a tread portion is referred to as the shoulder rib, and a rib interposed between the center rib and the shoulder rib is referred to as an intermediate rib. The density of small grooves is obtained by dividing the total length of small grooves included in the ribs by the area of the contact surfaces of the ribs.

### EXAMPLES

### [Experiment 1]

### [Example 1]

A green tire was put in a mold to cause a crosslinking reaction over a rubber, and a studless tire having a tread pattern shown in Figs. 1 to 3 was thus fabricated. The tire has a size of "195/65R15 91H". The small groove of the tire takes such a shape as to constitute a part of a wavy curve. The wavy curve is extended in an axial direction. The wavy curve has the number of cycles of 2.0 and an amplitude of 7 mm. The small groove has a width of 0.3 mm and a depth of 0.3 mm. The small groove has a pitch of 2.0 mm.

### [Examples 3 to 8]

A tire according to each of examples 3 to 8 was obtained in the same manner as in the example 1 except that a mold was changed and the depth of a small groove was set as shown in the following Table 1. Examples 6, 7 and 8 are not, however, in accordance with the invention.

### [Examples 2, 9 and 10]

A tire according to each of examples 2, 9 and 10 was obtained in the same manner as in the example 1 except that a mold was changed and the width of a small groove was set as shown in the following Table 1.

### [Examples 12 to 16]

A tire according to each of examples 12 to 16 was obtained in the same manner as in the example 1 except that a mold was changed and the pitch of a small groove was set as shown in the following Table 2.

### [Examples 11, 17 and 18]

A tire according to each of examples 11, 17 and 18 was obtained in the same manner as in the example 1 except that a mold was changed and the number C of cycles of a wavy curve was set as shown in the following Table 2.

### [Comparative Example 1]

A tire according to a comparative example 1 was obtained in the same manner as in the example 1 except that a mold was changed and a small groove was not provided.

### [Comparative Example 2]

A tire according to a comparative example 2 was obtained in the same manner as in the example 1 except that a mold was changed and a small groove was provided on a straight line extended in a circumferential direction.

### [Comparative Example 3]

A tire according to a comparative example 3 was obtained in the same manner as in the example 1 except that a mold was changed and a small groove was provided on a straight line extended in an axial direction.

### [Evaluation of Braking Performance]

A tire was incorporated into a rim of "15 X 6.5 - JJ". The tire was filled with air to have an internal pressure of 200 kPa. The tire was attached to a passenger car of a front engine rear drive type which has a displacement of 2500 cm³. The car was caused to run at a speed of 50 km/h over an icy road surface. Thus, a distance from braking to stop was measured. The measurement was carried out ten times to calculate a mean measured value, and furthermore, to calculate the inverse number of the mean value. The result is shown as an index with an evaluation in the comparative example 1 set to be 100 in the following Tables 1 and 2.

**Table 1 Result of Evaluation**

| | Example 2 | Example 3 | Example 4 | Example 1 | Example 5 | Example 6 | Example 7 | Example 8 | Example 9 | Example 10 |
|---|---|---|---|---|---|---|---|---|---|---|
| Shape | Wavy | Wavy | Wavy | Wavy | Wavy | Wavy | Wavy | Wavy | Wavy | Wavy |
| Number of cycles C | 2.0 | 2.0 | 2.0 | 2.0 | 2.0 | 2.0 | 2.0 | 2.0 | 2.0 | 2.0 |
| Pitch (mm) | 2.0 | 2.0 | 2.0 | 2.0 | 2.0 | 2.0 | 2.0 | 2.0 | 2.0 | 2.0 |
| Width (mm) | 0.1 | 0.3 | 0.3 | 0.3 | 0.3 | 0.3 | 0.3 | 0.3 | 0.5 | 1.0 |
| Depth (mm) | 0.3 | 0.1 | 0.2 | 0.3 | 0.5 | 0.7 | 1.0 | 1.5 | 0.3 | 0.3 |
| Braking performance | 103 | 103 | 104 | 106 | 107 | 104 | 103 | 102 | 109 | 105 |

**Table 2 Result of Evaluation**

| | Example 11 | Example 12 | Example 13 | Example 14 | Example 1 | Example 15 | Example 16 | Example 17 | Example 18 | Compa. example 1 | Compa. example 2 | Compa. example 3 |
|---|---|---|---|---|---|---|---|---|---|---|---|---|
| Shape | Wavy | Wavy | Wavy | Wavy | Wavy | Wavy | Wavy | Wavy | Wavy | None | Straight * | Straight ** |
| Number of cycles C | 1.0 | 2.0 | 2.0 | 2.0 | 2.0 | 2.0 | 2.0 | 3.5 | 7.0 | - | - | - |
| Pitch (mm) | 2.0 | 0.5 | 1.0 | 1.5 | 2.0 | 3.0 | 5.0 | 2.0 | 2.0 | - | 2.0 | 2.0 |
| Width (mm) | 0.3 | 0.3 | 0.3 | 0.3 | 0.3 | 0.3 | 0.3 | 0.3 | 0.3 | - | 0.3 | 0.3 |
| Depth (mm) | 0.3 | 0.3 | 0.3 | 0.3 | 0.3 | 0.3 | 0.3 | 0.3 | 0.3 | - | 0.3 | 0.3 |
| Braking performance | 103 | 102 | 107 | 107 | 106 | 105 | 102 | 108 | 106 | 100 | 100 | 101 |

| | | | | | | | | | | | | |
|---|---|---|---|---|---|---|---|---|---|---|---|---|
| * Straight line in circumferential direction ** Straight line in axialc direction | | | | | | | | | | | | |

As shown in the Tables 1 and 2, the tire according to each of the examples has an excellent braking performance.

### [Experiment 2]

### [Example 19]

A green tire was put in a mold to cause a crosslinking reaction over a rubber, and a studless tire having a tread pattern shown in Fig. 4 was thus fabricated. The tire has a size of "195/65R15 91H". The small groove of the tire takes such a shape as to constitute a part of a wavy curve. The wavy curve is extended in an axial direction. The wavy curve has the number of cycles of 2.0 and an amplitude of 7 mm. The small groove has a width of 0.3 mm and a depth of 0.3 mm. The pitch of the small groove in a center block is 1.0 mm and the pitches of the small grooves in a shoulder block and an intermediate block are 2. 0 mm. In the tire, a ratio (Dc/Ds) is approximately 2.0.

### [Examples 20 to 27]

A tire according to each of examples 20 to 27 was obtained in the same manner as in the example 19 except that a mold was changed and the pitch of a small groove in a center block was set as shown in the following Table 3.

### [Evaluation of Braking Performance]

By the same method as that in the experiment 1, a braking performance was evaluated. The tires according to the examples 19 to 27 were evaluated together with the tires according to the example 1 and the comparative example 1 in the experiment 1. The result is shown as an index with the evaluation in the example 1 set to be 100 in the following Table 3.

### [Evaluation of Uneven Wear Resistance]

The car was caused to run over an asphalted road surface. The degree of an uneven wear at a mileage of 1000 km was visually observed and a grading of "A" to "C" was carried out. The result is shown in the following Table 3. "A" is the most preferable.

**Table 3 Result of Evaluation**

| | | Compa. example 1 | Example 1 | Example 20 | Example 21 | Example 22 | Example 23 | Example 19 | Example 24 | Example 25 | Example 26 | Example 27 |
|---|---|---|---|---|---|---|---|---|---|---|---|---|
| Shape | | 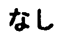 | Wavy | Wavy | Wavy | Wavy | Wavy | Wavy | Wavy | Wavy | Wavy | Wavy |
| Number of cycles C | | - | 2.0 | 2.0 | 2.0 | 2.0 | 2.0 | 2.0 | 2.0 | 2.0 | 2.0 | 2.0 |
| Width (mm) | | - | 0.3 | 0.3 | 0.3 | 0.3 | 0.3 | 0.3 | 0.3 | 0.3 | 0.3 | 0.3 |
| Depth (mm) | | - | 0.3 | 0.3 | 0.3 | 0.3 | 0.3 | 0.3 | 0.3 | 0.3 | 0.3 | 0.3 |
| Pitch (mm) | Center block | - | 2.00 | 1.67 | 1.54 | 1.33 | 1.18 | 1.00 | 0.91 | 0.80 | 0.77 | 0.67 |
| | Intermediate block | - | 2.00 | 2.00 | 2.00 | 2.00 | 2.00 | 2.00 | 2.00 | 2.00 | 2.00 | 2.00 |
| | Shoulder block | - | 2.00 | 2.00 | 2.00 | 2.00 | 2.00 | 2.00 | 2.00 | 2.00 | 2.00 | 2.00 |
| Ratio (Dc/Ds) | | - | 1.0 | 1.2 | 1.3 | 1.5 | 1.7 | 2.0 | 2.2 | 2.5 | 2.6 | 3.0 |
| Braking performance | | 94 | 100 | 101 | 102 | 105 | 106 | 108 | 108 | 110 | 110 | 111 |
| Uneven wear resistance | | A | A | A | A | A | A | A | B | B | C | C |

As shown in the Table 3, the tire according to each of the examples has an excellent braking performance. From the results of the experiments 1 and 2, the advantages of the present invention are apparent.

The tread pattern described above can be applied to various passenger car tires in addition to a studless tire. The above description is only illustrative and various changes can be made without departing from the scope of the present invention.

## Claims

1. A pneumatic tire (2) comprising a tread portion (4),
wherein a plurality of small grooves (G) are formed on a surface of the tread portion (4), a depth of the small grooves (G) is equal to or greater than 0.1 mm and is equal to or smaller than 0.5 mm, and a pitch of the small grooves (G) is equal to or greater than 0.5 mm and is equal to or smaller than 5.0 mm,
**characterized in that**
the plurality of small grooves (G) have such a shape as to constitute a whole or part of a wavy curve,
wherein the wavy curve is extended in an axial direction of the tire and reaches from one of the tread ends (Ea) to the other tread end (Eb) of the tread portion (4), and
the number of cycles of the wavy curve in the axial direction from one of the tread ends (Ea) to the other tread end (Eb) is equal to or larger than 1.0 and is equal to or smaller than 7.0.

2. The pneumatic tire (2) according to claim 1, wherein a width of the small groove (G) is equal to or greater than 0.1 mm and is equal to or smaller than 2.0 mm.

3. The pneumatic tire (2) according to any one of claims 1 to 2, wherein the tread portion (4) has a circumferential groove (10, 12), a lateral groove (16, 18, 20) and a large number of blocks (24, 26, 28, 30) partitioned by the circumferential groove (10, 12) and the lateral groove (16, 18, 20), and
the plurality of small grooves (G) are formed on surfaces of the blocks (24).

4. The pneumatic tire (2) according to claim 3, wherein the block (24, 26, 28, 30) further includes a siping (S) taking a zigzag shape on the surface, and the small groove (G) and the siping (S) are inclined reversely to each other in an axial direction.

5. The pneumatic tire (2) according to claim 3, wherein the block (24, 26, 28, 30) is formed by crosslinking a rubber composition having a short fiber dispersed therein.

6. The pneumatic tire (2) according to claim 3, wherein the blocks (24) include a center block (30) positioned in the vicinity of an equator plane (CL) and a shoulder block (24) positioned in the vicinity of a tread end (Ea, Eb), and
a density (Dc) of small grooves (G) in the center block (30) is higher than a density (Ds) of small grooves (G) in the shoulder block (24).

7. The pneumatic tire (2) according to claim 6, wherein a ratio (Dc/Ds) of the density (Dc) of the small grooves (G) in the center block (30) to the density (Ds) of the small grooves (G) in the shoulder block (24) is equal to or higher than 1.5 and is equal to or lower than 5.0.

8. The pneumatic tire (2) according to claim 1, wherein the tread portion has a plurality of circumferential grooves (10, 12) and a plurality of ribs partitioned by the circumferential grooves (10, 12), and
the plurality of small grooves (G) are formed on surfaces of the ribs.

9. The pneumatic tire (2) according to claim 8, wherein the ribs include a center rib positioned in the vicinity of an equator plane (CL) and a shoulder rib positioned in the vicinity of a tread end (Ea, Eb), and
a density (Dc) of small grooves (G) in the center rib is higher than a density (Ds) of small grooves in the shoulder rib.

10. The pneumatic tire (2) according to claim 9, wherein a ratio (Dc/Ds) of the density (Dc) of the small grooves (G) in the center rib to the density (Ds) of the small grooves (G) in the shoulder rib is equal to or higher than 1.5 and is equal to or lower than 5.0.

## Patentansprüche

1. Luftreifen (2) mit einem Laufflächenabschnitt (4),
wobei eine Vielzahl von kleinen Rillen (G) an einer Oberfläche des Laufflächenabschnitts (4) gebildet ist, wobei eine Tiefe der kleinen Rillen (G) gleich oder größer als 0,1 mm und gleich oder kleiner als 0,5 mm ist, und ein Teilungsabstand der kleinen Rillen (G) gleich oder größer als 0,5 mm und gleich oder kleiner als 5,0 mm ist,
**dadurch gekennzeichnet, dass**
die Vielzahl von kleinen Rillen (G) eine solche Form aufweist, dass eine Gesamtheit oder ein Teil einer Wellenkurve gebildet ist,
wobei die Wellenkurve sich in einer axialen Richtung des Reifens erstreckt und von einem der Laufflächenenden (Ea) zu dem anderen Laufflächenende (Eb) des Laufflächenabschnitts (4) reicht, und
die Zahl von Zyklen der Wellenkurve in der axialen Richtung von einem der Laufflächenenden (Ea) zu dem anderen Laufflächenende (Eb) gleich oder größer als 1,0 und gleich oder kleiner als 7,0 ist.

2. Luftreifen (2) nach Anspruch 1,
wobei eine Breite der kleinen Rille (G) gleich oder größer als 0,1 mm und gleich oder kleiner als 2,0 mm ist.

3. Luftreifen (2) nach einem der Ansprüche 1 bis 2,
wobei der Laufflächenabschnitt (4) eine Umfangsrille (10, 12), eine Querrille (16, 18, 20) und eine große Zahl von Blöcken (24, 26, 28, 30) aufweist, die durch die Umfangsrille (10, 12) und die Querrille (16, 18, 20) unterteilt sind, und
die Vielzahl von kleinen Rillen (G) an Oberflächen der Blöcke (24) gebildet ist.

4. Luftreifen (2) nach Anspruch 3,
wobei der Block (24, 26, 28, 30) ferner einen Feinschnitt (S) umfasst, der an der Oberfläche eine Zickzackform annimmt, und die kleine Rille (G) und der Feinschnitt (S) umgekehrt in Bezug zueinander in einer axialen Richtung geneigt sind.

5. Luftreifen (2) nach Anspruch 3,
wobei der Block (24, 26, 28, 30) durch Quervernetzen einer Kautschukmischung mit einer darin verteilten Kurzfaser gebildet ist.

6. Luftreifen (2) nach Anspruch 3,
wobei die Blöcke (24) einen Mittelblock (30), der in der Nachbarschaft einer Äquatorebene (CL) angeordnet ist, und einen Schulterblock (24) umfassen, der in der Nachbarschaft eines Laufflächenendes (Ea, Eb) angeordnet ist, und
eine Dichte (Dc) von kleinen Rillen (G) in dem Mittelblock (30) höher ist als eine Dichte (Ds) von kleinen Rillen (G) in dem Schulterblock (24).

7. Luftreifen (2) nach Anspruch 6,
wobei ein Verhältnis (Dc/Ds) der Dichte (Dc) der kleinen Rillen (G) in dem Mittelblock (30) zu der Dichte (Ds) der kleinen Rillen (G) in dem Schulterblock (24) gleich oder größer als 1,5 und gleich oder kleiner als 5,0 ist.

8. Luftreifen (2) nach Anspruch 1,
wobei der Laufflächenabschnitt eine Vielzahl von Umfangsrillen (10, 12) und eine Vielzahl von Rippen aufweist, die durch die Umfangsrillen (10, 12) unterteilt sind, und
die Vielzahl von kleinen Rillen (G) an Oberflächen der Rippen gebildet ist.

9. Luftreifen (2) nach Anspruch 8,
wobei die Rippen eine Mittelrippe, die in der Nachbarschaft einer Äquatorebene (CL) angeordnet ist, und eine Schulterrippe umfassen, die in der Nachbarschaft eines Laufflächenendes (Ea, Eb) angeordnet ist, und
eine Dichte (Dc) von kleinen Rillen (G) in der Mittelrippe höher ist als eine Dichte (Ds) von kleinen Rillen in der Schulterrippe.

10. Luftreifen (2) nach Anspruch 9,
wobei ein Verhältnis (Dc/Ds) der Dichte (Dc) der kleinen Rillen (G) in der Mittelrippe zu der Dichte (Ds) der kleinen Rillen (G) in der Schulterrippe gleich oder größer als 1,5 und gleich oder kleiner als 5,0 ist.

## Revendications

1. Bandage pneumatique (2) comprenant une partie de bande de roulement (4),
dans lequel une pluralité de petites rainures (G) sont formées sur une surface de la partie de bande de roulement (4), une profondeur des petites rainures (G) est égale ou supérieure à 0,1 mm et est égale ou inférieure à 0,5 mm et un pas des petites rainures (G) est égal ou supérieur à 0,5 mm et est égal ou inférieur à 5,0 mm,
**caractérisé en ce que** :
la pluralité de petites rainures (G) ont une forme telle qu'elles constituent la totalité ou une partie d'une courbe ondulée,
dans lequel la courbe ondulée est prévue dans une direction axiale du bandage et passe de l'une des extrémités de bande de roulement (Ea) à l'autre extrémité de bande de roulement (Eb) de la partie de bande de roulement (4), et
le nombre de cycles de la courbe ondulée dans la direction axiale de l'une des extrémités de bande de roulement (Ea) à l'autre extrémité de bande de roulement (Eb) est égal ou supérieur à 1,0 et est égal ou inférieur à 7,0.

2. Bandage pneumatique (2) selon la revendication 1, dans lequel une largeur de la petite rainure (G) est égale ou supérieure à 0,1 mm et est égale ou inférieure à 2,0 mm.

3. Bandage pneumatique (2) selon l'une quelconque des revendications 1 à 2, dans lequel la partie de bande de roulement (4) a une rainure circonférentielle (10, 12), une rainure latérale (16, 18, 20) et un grand nombre de blocs (24, 26, 28, 30) séparés par la rainure circonférentielle (10, 12) et la rainure latérale (16, 18, 20), et
la pluralité de petites rainures (G) sont formées sur les surfaces des blocs (24).

4. Bandage pneumatique (2) selon la revendication 3, dans lequel le bloc (24, 26, 28, 30) comprend en outre une gorge (S) prenant une forme de zigzag sur la surface, et la petite rainure (G) et la gorge (S) sont inclinées de manière opposée l'une par rapport à l'autre dans une direction axiale.

5. Bandage pneumatique (2) selon la revendication 3, dans lequel le bloc (24, 26, 28, 30) est formé en réticulant une composition de caoutchouc ayant une fibre courte dispersée à l'intérieur de cette dernière.

6. Bandage pneumatique (2) selon la revendication 3, dans lequel les blocs (24) comprennent un bloc central (30) positionné à proximité d'un plan équateur (CL) et un bloc d'épaulement (24) positionné à proximité d'une extrémité de bande de roulement (Ea, Eb), et
une densité (Dc) de petites rainures (G) dans le bloc central (30) est supérieure à une densité (Ds) de petites rainures (G) dans le bloc d'épaulement (24).

7. Bandage pneumatique (2) selon la revendication 6, dans lequel un rapport (Dc/Ds) de la densité (Dc) des petites rainures (G) dans le bloc central (30) sur la densité (Ds) des petites rainures (G) dans le bloc d'épaulement (24) est égal ou inférieur à 1,5 et est égal ou inférieur à 5,0.

8. Bandage pneumatique (2) selon la revendication 1, dans lequel la partie de bande de roulement a une pluralité de rainures circonférentielles (10, 12) et une pluralité de nervures séparées par des rainures circonférentielles (10, 12), et
une pluralité de petites rainures (G) sont formées sur les surfaces des nervures.

9. Bandage pneumatique (2) selon la revendication 8, dans lequel les nervures comprennent une nervure centrale positionnée à proximité d'un plan d'équateur (CL) et une nervure d'épaulement positionnée à proximité d'une extrémité de bande de roulement (Ea, Eb), et
une densité (Dc) de petites rainures (G) dans la nervure centrale est supérieure à une densité (Ds) de petites rainures dans la nervure d'épaulement.

10. Bandage pneumatique (2) selon la revendication 9, dans lequel un rapport (Dc/Ds) de la densité (Dc) de petites rainures (G) dans la nervure centrale sur la densité (Ds) de petites rainures (G) dans la nervure d'épaulement est égal ou supérieur à 1,5 et est égal ou inférieur à 5,0.
